# EUROPEAN PATENT APPLICATION

(11) **EP 1 719 937 A2**
(43) Date of publication of application: **08.11.2006**
(21) Application number: 06007507.4
(22) Date of filing: 10.04.2006
(51) Int. Cl.: F16K 3/02, F16K 11/065, B41F 23/06

(54) **Air flow adjusting apparatus**

(30) Priority: 13.04.2005 JP 2005115456
(71) Applicant: Komori Corporation, Sumida-ku Tokyo (JP)
(72) Inventor: You, Shimizu, Tsukuba-shi Ibaraki (JP)
(74) Representative: Samson & Partner

(57) **Abstract**

An air flow adjusting apparatus includes first (24,41), second (25,42), and third (26,43) air passages, and a flow adjusting plate. The first air passage is to be connected to a load. The second air passage is to be connected to an atmosphere. The third air passage (26,43) is to be connected to an air source and branches to be connected to the first and second air passages. The flow adjusting plate opens/closes a first connecting portion (27,45,127) between the first and third air passages and a second connecting portion (28,49,128) between the second and third air passages in an interlocked manner. The flow adjusting plate opens/closes the first and second connecting portions with a sum of opening areas of the first and second connecting portions being always set constant.

## Description

### Background of the Invention

The present invention relates to an air flow adjusting apparatus which adjusts the flow rate of air to be discharged or taken in from an air source to a load.

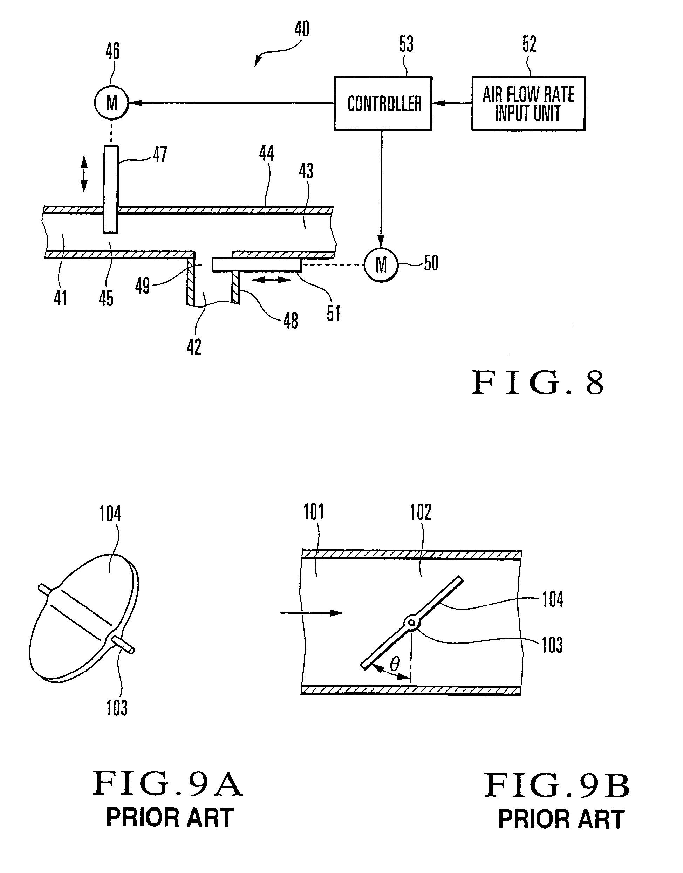

A conventional air flow adjusting apparatus shown in Japanese Utility Model Publication No. 8-5806 comprises an air supply passage 101 through which suction air is supplied to a sheet feed device, a valve chamber 102 arranged in the air supply passage 101, and a butterfly valve 104 which is arranged in the valve chamber 102 and pivots about a support shaft 103, as shown in Figs. 9A and 9B. In this arrangement, the quantity of suction air to the sheet feed device is adjusted by adjusting an opening angle θ of the butterfly valve 104.

The air flow adjusting apparatus shown in Japanese Utility Model Laid-Open No. 59-162552 comprises an air blowing passage and air suction passage respectively connected to the discharge port and suction port of an air pump, and switching valves respectively arranged between the air blowing passage and a suction wheel and between the air suction passage and a suction wheel. Each switching valve has a notch with a semilunar section. When the switching valve pivots, the quantity of suction air or discharge air to the suction wheel is adjusted through the notch.

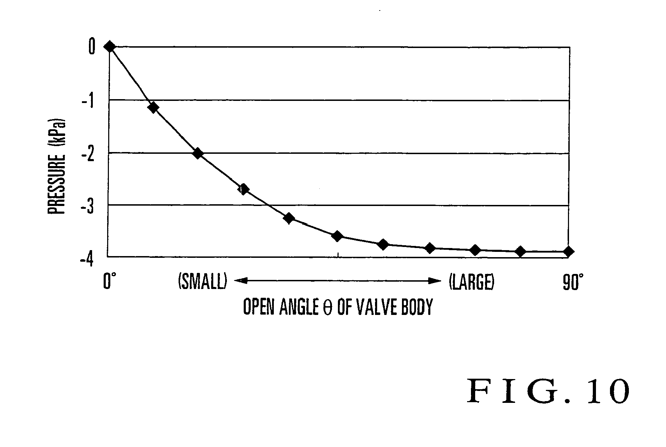

In the conventional air flow adjusting apparatuses described above, when the opening angle θ of the valve body is small, the quantity of air passing through the valve body is relatively small for a change in opening angle θ of the valve body. When the opening angle θ of the valve body is large, the quantity of air relatively increases for a change in opening angle θ of the valve body. Thus, the relationship between the opening angle of the valve body and the pressure of air to be supplied is not constant, as shown in Fig. 10.

In the conventional air flow adjusting apparatuses described above, when the air passage is entirely shielded by the valve body, the pressure of air supplied from an air source increases the internal pressure between the air source and valve body. In this state, when the valve body starts to open the air passage, the quantity of air passing through the valve body temporarily reaches a flow rate equal to or more than that corresponding to the opening angle of the valve body, and the pressure of air to be supplied fluctuates largely. Therefore, in the conventional air flow adjusting apparatuses described above, it is difficult to adjust the flow rate of air highly accurately.

### Summary of the Invention

It is an object of the present invention to provide an air flow adjusting apparatus which facilitates air flow adjustment highly accurately.

In order to achieve the above object, according to the present invention, there is provided an air flow adjusting apparatus comprising a first air passage to be connected to a load, a second air passage to be connected to an atmosphere, a third air passage which is to be connected to an air source and branches to be connected to the first air passage and the second air passage, and opening/closing means for opening/closing a first connecting portion between the first air passage and the third air passage and a second connecting portion between the second air passage and the third air passage in an interlocked manner, wherein the opening/closing means opens/closes the first connecting portion and the second connecting portion with a sum of an opening area of the first connecting portion and an opening area of the second connecting portion being always set constant.

### Brief Description of the Drawings

Fig. 1 is a side view of a delivery unit in a sheet-fed offset rotary printing press to which an air flow adjusting apparatus according to the first embodiment of the present invention is applied;
Fig. 2A is a longitudinal sectional view of the valve cage shown in Fig. 1;
Figs. 2B and 2C respectively show the opening states of the first and second connecting portions shown in Fig. 2A;
Fig. 3A is a sectional view taken along the line III-A - III-A of Fig. 2A;
Fig. 3B is a front view of a flow adjusting plate seen from the direction of an arrow III-B of Fig. 2A;
Fig. 4A is a longitudinal sectional view of a valve cage when the negative pressure is between zero and maximum;
Figs. 4B and 4C respectively show the opening states of the first and second connecting portions shown in Fig. 4A;
Fig. 5A is a longitudinal sectional view of the valve cage when the negative pressure is maximum;
Figs. 5B and 5C respectively show the opening states of the first and second connecting portions shown in Fig. 5A;
Fig. 6 is a graph showing the relationship between the moving amount of a flow adjusting plate and the air pressure;
Fig. 7A is a longitudinal sectional view of a valve cage according to the second embodiment of the present invention;
Fig. 7B is a front view of a flow adjusting plate used in the valve cage shown in Fig. 7A;
Fig. 8 is a view showing the schematic arrangement of an air flow adjusting apparatus according to the third embodiment of the present invention;
Figs. 9A and 9B are perspective and side views, respectively, of a conventional air flow adjusting apparatus; and
Fig. 10 is a graph showing the relationship between the opening angle of a valve body and the air pressure in the conventional air flow adjusting apparatus.

### Description of the Preferred Embodiments

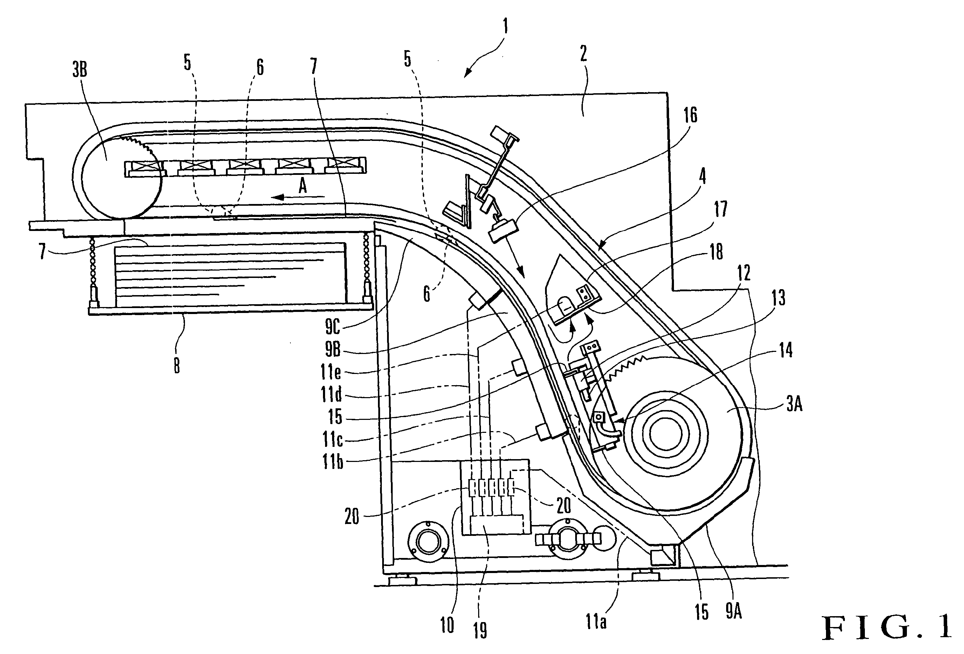

An air flow adjusting apparatus according to the first embodiment of the present invention will be described with reference to Figs. 1 to 6. This embodiment is directed to an air flow adjusting apparatus applied to a sheet-fed offset rotary printing press.

Referring to Fig. 1, a delivery unit 1 in the sheet-fed offset rotary printing-press comprises a pair of frames 2 (one frame 2 is not shown) connected by a substantially inverted-L-shaped stay (not shown). A pair of front and rear sprockets 3A and 3B are rotatably supported by the pair of frames 2. A pair of delivery chains 4 (one delivery chain 4 is not shown) are looped between the sprockets 3A and 3B. When the sprocket 3A is driven to rotate by a motor, the delivery chains 4 travel in a sheet convey direction (direction of an arrow A in Fig. 1).

A plurality of gripper bars 5 each comprising a gripper pad and gripper pad shaft are supported between the pair of delivery chains 4 at predetermined intervals in the direction of the arrow A. A plurality of gripper devices 6 each comprising a gripper and gripper pad line up on each gripper bar 5 in the axial direction. The gripper devices 6 grip a paper sheet 7 from the gripper devices 6 of the final cylinder of a printing unit arranged upstream of the delivery unit 1 in the sheet convey direction, and conveys the paper sheet 7 as the delivery chains 4 travel. The paper sheet 7 conveyed by the gripper devices 6 is released when the grippers of the gripper devices 6 are opened and closed with respect to the gripper pads by sheet release cams (not shown), and is dropped on a pile board 8 and stacked there.

Three paper guides 9A, 9B, and 9C divided in the sheet convey direction are provided with air suction ducts (not shown) which are connected to a dust collector 10 through hoses 11a, 11b, 11c, and 11d. A spray pipe 12 supported between the pair of frames 2 is disposed on an upright portion extending obliquely upward from the starting end of the delivery chains 4. The spray pipe 12 is connected to an air supply source (not shown). The spray pipe 12 has a plurality of spray nozzles 13 which line up, and blows powder to the paper sheet 7 under conveyance by the delivery chains 4.

The spray pipe 12 and spray nozzles 13 are covered with a box-like cover 14 which is supported between the pair of frames 2 and has one open face opposing the paper sheet 7 under conveyance. The two, front and rear wall surfaces of the cover 14 are provided with brushes 15 which come into slidable contact with the traveling gripper bars 5 and gripper devices 6. The powder discharged from the spray nozzles 13 is blown to the printed surface of the paper sheet 7 under conveyance in a space surrounded by the cover 14 and brushes 15.

A blowing device 16 supported between the pair of frames 2 is arranged above the sheet convey path downstream of the spray nozzles 13 in the sheet convey direction, and blows air to the printed surface of the paper sheet 7 under conveyance to be substantially parallel to the printed surface of the paper sheet 7 and toward the upstream in the sheet convey direction. An air suction duct 17 supported between the pair of frames 2 is disposed above the sheet convey path located at substantially the intermediate portion between the spray nozzles 13 and blowing device 16. The air suction duct 17 takes in excessive powder blown from the spray nozzles 13 and leaking from the space surrounded by the cover 14 and brushes 15 together with air blown from the blowing device 16. The air suction duct 17 is connected to a blower 19, serving as an air source in the dust collector 10, through a hose 11e and air flow adjusting devices 20 (to be described later). A porous plate 18 having many suction holes is attached to the air suction duct 17 to face upstream in the sheet convey direction.

In this arrangement, after the paper sheet 7 is gripping-changed from the last cylinder of the printing unit to the gripper devices 6 and conveyed by the delivery chains 4, the powder discharged from the spray nozzles 13 is blown to the printed surface of the paper sheet 7. Therefore, at a sheet delivery unit as the convey terminal end, setoff or so-called blocking does not occur between paper sheets 7 stacked on the pile board 8. The excessive powder blown from the spray nozzles 13 and leaking from the space surrounded by the cover 14 and brushes 15 is regulated from flowing downstream in the sheet convey direction with air blown from the blowing device 16, and is taken in by the air suction duct 17.

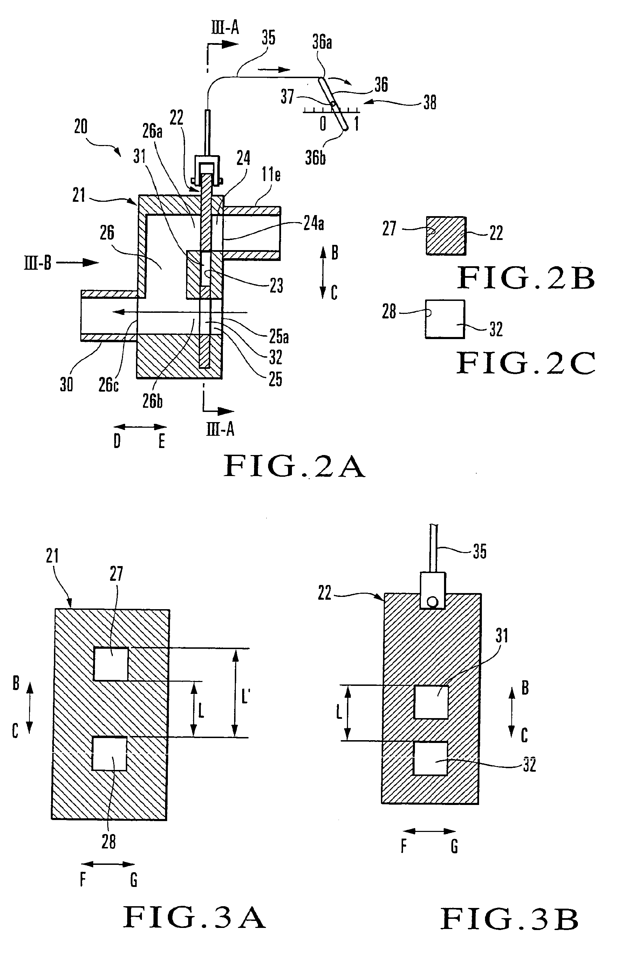

The air flow adjusting devices 20 will be described with reference to Figs. 2A to 5C. The air flow adjusting devices 20 are arranged between the respective air suction ducts of the paper guides 9A, 9B, and 9C and the blower 19 and between the air suction duct 17 and blower 19, to correspond to the respective ducts. The respective air flow adjusting devices 20 have the same arrangement. Hence, in the following description, the air flow adjusting device arranged between the air suction duct 17 and blower 19 will be described in detail, and the remaining air flow adjusting devices arranged between the respective air suction ducts of the paper guides 9A, 9B, and 9C and the blower 19 will be appropriately described when necessary.

As shown in Fig. 2A, the air flow adjusting device 20 has a rectangular parallelepiped valve cage 21 and a flow adjusting plate 22 serving as an air flow adjusting means which opens/closes two air paths in the valve cage 21. The valve cage 21 has an air path comprising a first air passage 24 and third air passage 26 which communicate with each other through a first connecting portion 27 (Fig. 2B), and an air path comprising a second air passage 25 and the third air passage 26 which communicate with each other through a second connecting portion 28 (Fig. 2C). The two air paths extend in the same direction.

The flow adjusting plate 22 (opening/closing means) is supported to be movable in a direction (direction of arrows B - C) perpendicular to the air channels in the respective air passages so as to block the first and second connecting portions 27 and 28. A slit 23 is formed in the valve cage 21. The slit 23 extends in the direction of the arrows B - C to correspond to the first and second connecting portions 27 and 28 and opens to one end face of the valve cage box 21. The flow adjusting plate 22 is supported to be movable in the slit 23 in the direction of the arrows B - C.

The first air passage 24 is formed in the valve cage 21 in a direction (direction of arrows D - E) perpendicular to the slit 23, and connected to an opening 24a which opens to one side surface (on the side of the direction of the arrow E) of the valve cage 21. The second air passage 25 is formed in the valve cage 21 in a direction (direction of the arrows D - E) perpendicular to the slit 23, and connected to an opening 25a which opens to one side surface (on the side of the direction of the arrow E) of the valve cage 21. The first and second first connecting portions 27 and 28 respectively connected to the first and second air passages 24 and 25 are formed at the same position in the widthwise direction (direction of arrows F - G) in the flow adjusting plate 22, as shown in Fig. 3A. The first and second first connecting portions 27 and 28 are spaced apart from each other by a gap with a length L to have the same sectional area and the same sectional shape (square). The opening 24a of the first air passage 24 is connected to the air suction duct 17 through the hose 11e. The opening 25a of the second air passage 25 is connected to the atmosphere.

A third air passage 26 is formed in the valve cage 21 to extend in the direction of the arrows B - C. One end 26a of the air passage 26 extends to the first connecting portion 27 and communicates with the first air passage 24 through the first connecting portion 27. The other end 26b of the third air passage 26 extends to the second connecting portion 28 and communicates with the second air passage 25 through the second connecting portion 28. An opening 26c is formed in that side surface of the valve cage 21 which is opposite (the direction of the arrow D) to the first and second air passages 24 and 25. The opening 26c is connected to the blower 19 through a hose 30. Namely, the third air passage 26 starting from the opening 26c branches in the valve cage 21 so as to be connected to the first and second connecting portions 27 and 28.

As shown in Fig. 3B, the flow adjusting plate 22 has first and second communication windows 31 and 32 which are formed at the same position in the direction of the arrows F - G and are spaced apart from each other at a predetermined interval in the direction of the arrows B - C. The first and second communication windows 31 and 32 have the same area and the same shape. In this embodiment, the first and second communication windows 31 and 32 have the same area and the same shape (square) as those of the sectional shapes of the first and second connecting portions 27 and 28. An interval (array interval) L between one side in the direction of the arrow B of the first communication window 31 and one side in the direction of the arrow B of the second communication window 32, of the first and second communication windows 31 and 32, is set to be equal to a distance L between the first and second air passages 24 and 25. More specifically, the array interval L between the first and second communication windows 31 and 32 is set to be equal to a length obtained by subtracting the length of one side in the direction of array of each section of the first and second connecting portions from an array interval L' of each section of the first and second connecting portions. Thus, the first and second connecting portions 27 and 28 are opened complementarily.

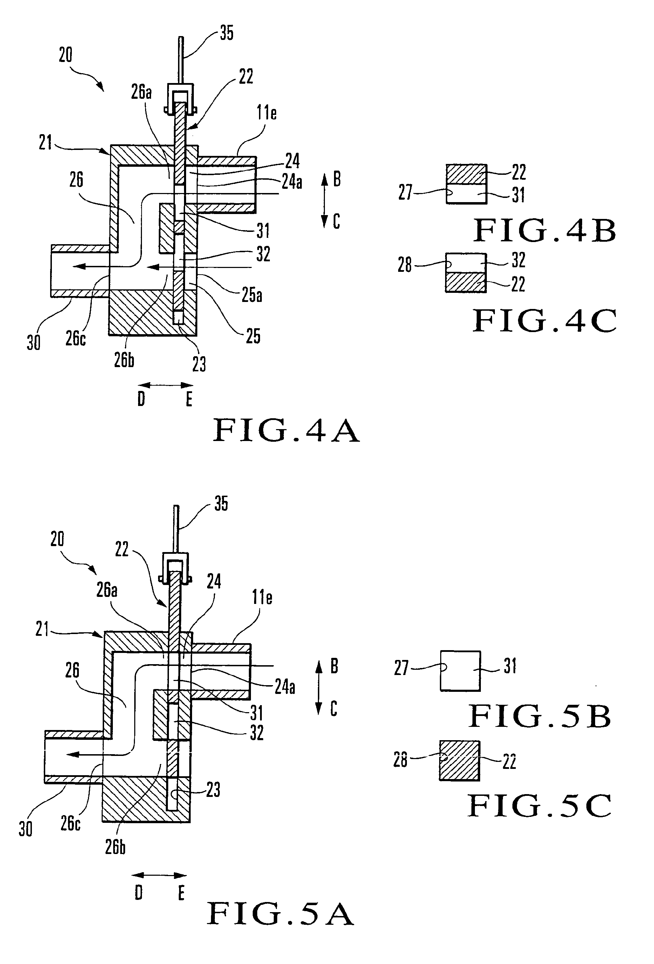

Regarding flow adjustment, the flow adjusting plate 22 is accommodated in the slit 23 of the valve cage 21. At this time, when the second communication window 32 coincides with the second connecting portion 28, as shown in Figs. 2A and 2C, the first connecting portion 27 is entirely shielded by the flow adjusting plate 22, as shown in Fig. 2B. In this state, the flow adjusting plate 22 is moved in the direction of the arrow B. as shown in Fig. 4A. At this time, when the flow adjusting plate 22 half shields the second connecting portion 28, as shown in Fig. 4C, the first connecting portion 27 is opened half by the first communication window 31, as shown in Fig. 4B.

When the flow adjusting plate 22 further moves in the direction of the arrow B, as shown in Fig. 5A, the flow adjusting plate 22 shields the second connecting portion 28 entirely, as shown in Fig. 5C. Simultaneously, as shown in Fig. 5B, the first connecting portion 27 is entirely opened by the first communication window 31, as shown in Fig. 5B. More specifically, in the air flow adjusting device 20, the sum of the opening area of the first connecting portion 27 obtained by the first communication window 31 and the opening area of the second connecting portion 28 obtained by the second communication window 32 is always constant to follow the movement of the flow adjusting plate 22 in the direction of the arrows B - C.

Referring back to Fig. 2A, a wire 35 has one end pivotally connected on the end in the direction of the arrow B of the flow adjusting plate 22 and the other end pivotally connected on a swing end 36a of a manipulation lever 36. The manipulation lever 36 is swingably supported at its central portion by a shaft 37, and has a manipulation end 36b, at its end opposite to the swing end 36a, which is manipulated by the operator. A scale 38 indicating the moving amount of the flow adjusting plate 22 is printed to correspond to the manipulation end 36b. When the manipulation lever 36 is pivoted clockwise or counterclockwise about the shaft 37 as the center, the flow adjusting plate 22 moves in the direction of the arrow B or C through the wire 35.

A method of adjusting the flow rate of suction air to be supplied to the respective air suction ducts of the paper guides 9A, 9B, and 9C and to the air suction duct 17 in the air flow adjusting apparatus with the above arrangement will be described. The first connecting portion 27 of the air flow adjusting device 20 is entirely shielded by the flow adjusting plate 22 in advance, as shown in Fig. 2B. Simultaneously, the second connecting portion 28 entirely coincides with the second communication window 32, as shown in Fig. 2C.

In this state, the switch of the blower 19 of the dust collector 10 is turned on. In this case, the air suction duct 17 does not communicate with the third air passage 26, and supply of suction air to the air suction duct 17 is stopped. Thus, the pressure of the suction air to be supplied to the air suction duct 17 is "0". Subsequently, when the manipulation lever 36 of the air flow adjusting device 20 pivots counterclockwise about the shaft 37 as the center, the flow adjusting plate 22 moves in the direction of the arrow B, as shown in Fig. 4A. Thus, the communication window 31 partly opposes the first connecting portion 27 to open the first connecting portion 27 partly, as shown in Fig. 4B. Simultaneously, the second connecting portion 28 is partly shielded by the flow adjusting plate 22, as shown in Fig. 4C.

Therefore, the suction air supplied from the blower 19 to the third air passage 26 partly passes through the first connecting portion 27 and is supplied to the air suction duct 17 as the negative pressure. The remaining suction air is taken in from the atmosphere through the second connecting portion 28. To maximize the supply quantity of the suction air to the air suction duct 17, the air flow adjusting plate 22 is moved further in the direction of the arrow B, as shown in Fig. 5A. Thus, the first connecting portion 27 is entirely opened by the first communication window 31, as shown in Fig. 5B, and the second connecting portion 28 is entirely shielded by the air flow adjusting plate 22.

In air flow adjustment, since the sum of the opening area of the first connecting portion 27 and the opening area of the second connecting portion 28 is always constant, the sum of the quantity of air-passing through the first connecting portion 27 and the quantity of air passing through the second connecting portion 28 can always be set constant. Hence, the internal pressure between the blower 19 and the first connecting portion 27 can always be set constant. Even if the opening area of the first connecting portion 27 is "0" the internal pressure does not increase. Therefore, the influence of the internal pressure, which occurs conventionally when the first connecting portion 27 starts to open, can be eliminated to eliminate large air pressure fluctuation. Thus, air flow can be adjusted highly accurately.

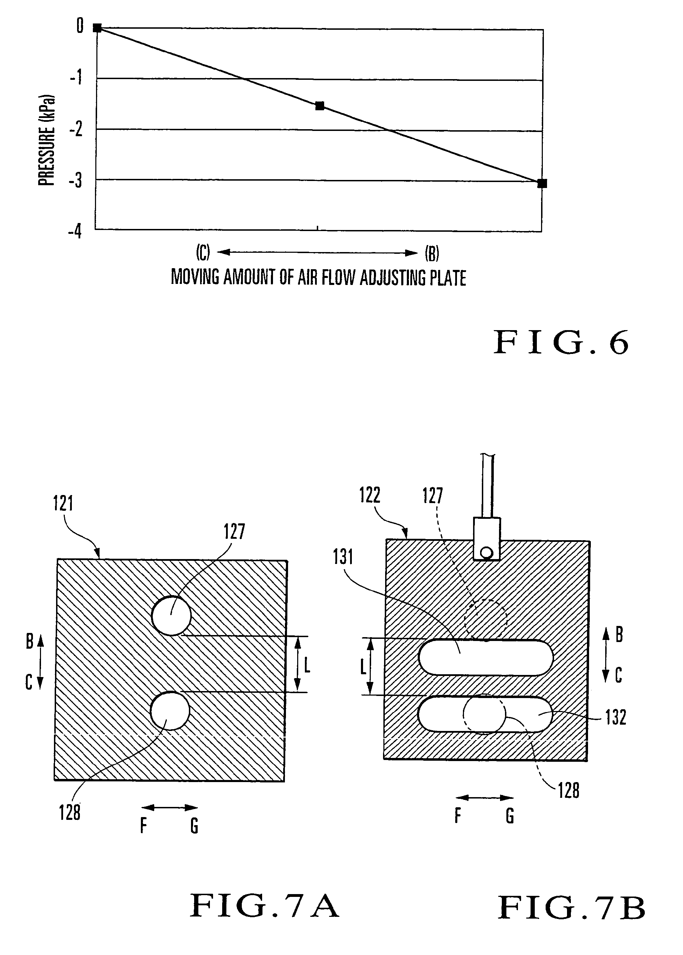

Since the shapes of the first and second communication windows 31 and 32 and the respective sectional shapes of the first and second connecting portions 27 and 28 are rectangular, the relationship (ratio) between the moving amount of the flow adjusting plate 22 in the direction of the arrows B - C and the change amount of the opening area of the first connecting portion 27 is constant. Therefore, the ratio of the moving amount of the flow adjusting plate 22 to the pressure of air in the air suction duct 17 connected to the first connecting portion 27 becomes constant, as shown in Fig. 6. Thus, highly accurate air flow adjustment can be performed easily. The change amounts in opening area of the first and second connecting portions 27 and 28 can be controlled in an interlocking manner by the two communication windows 31 and 32. Thus, the control becomes easy, and the structure can be simplified.

The second embodiment of the present invention will be described with reference to Figs. 7A and 7B. The second embodiment is different from the first embodiment described above in that first and second connecting portions 127 and 128 of a valve cage 121 have circular sections and that the shapes of first and second communication windows 131 and 132 of a flow adjusting plate 122 are ellipses having major axes in a direction of arrows F - G.

The sizes of the first and second communication windows 131 and 132 in a direction of arrows B - C are set to be equal to the diameters of the first and second connecting portions 127 and 128. In the same manner as in the first embodiment, an interval L between one side in the direction of the arrow B of the first communication window 131 and one side in the direction of the arrow B of the second communication window 132 is set to be equal to an interval L between the first and second connecting portions 127 and 128. Hence, in the same manner as in the first embodiment, the sum of the opening area of the first connecting portion 127 obtained by the first communication window 131 and the opening area of the second connecting portion 128 obtained by the second communication window 132 is always constant to follow the movement of the flow adjusting plate 122 in the direction of the arrows B - C.

According to this embodiment, the first and second communication windows 131 and 132 are formed as ellipses having major axes in the direction of the arrows F - G. Even when the positions of the valve cage 121 and flow adjusting plate 122 shift in the direction of the arrows F - G, the opening areas of the first and second connecting portions 127 and 128 do not become smaller than the regular opening areas. Thus, the supply quantity of suction air to the suction duct does not become smaller than a predetermined supply quantity, and an accurate quantity of air can be supplied.

The third embodiment of the present invention will be described with reference to Fig. 8. The third embodiment is different from the first and second embodiments in that two flow adjusting plates are employed and that the two flow adjusting plates are moved by motors. An air flow adjusting apparatus 40 according to this embodiment comprises a first air passage 41 connected to a suction duct 17, a second air passage 42 connected to the atmosphere, and a third air passage 43 where the first and second air passages 41 and 42 merge to be connected to an air source.

The first and third air passages 41 and 43 are arranged in a first hollow body 44 serving as a valve cage. A first connecting portion 45 between the first and third air passages 41 and 43 is shielded or opened by a first flow adjusting plate 47 which is driven by a first motor 46 to move in the radial direction (vertical direction in Fig. 8) of the air passages 41 and 43. A second hollow body 48 which forms the second air passage 42 is connected to the first hollow body 44 through a communication hole 49 which is formed in the first hollow body 44 and serves as the second connecting portion. The second connecting portion 49 is shielded or opened by a second flow adjusting plate 51 which is driven by a second motor 50 so as to move in the radial direction (horizontal direction in Fig. 8) of the air passage 42. The first and second connecting portions 45 and 49 have the same sectional area and the same sectional shape.

An air flow rate input unit 52 to which the value of the suction air quantity to be supplied to the air suction duct 17 is connected to a controller 53. The controller 53 controls the driving directions and driving times of the first and second motors 46 and 50 on the basis of an input value input to the air flow rate input unit 52. More specifically, the controller 53 controls the first and second motors 46 and 50 to move the first and second flow adjusting plates 47 and 48 such that the sum of the opening area of the first connecting portion 45 obtained by the first flow adjusting plate 47 and the opening area of the second communication hole 49 obtained by the second flow adjusting plate 51 is always constant.

According to this embodiment, since the relationship (ratio) between the moving amounts of the first and second flow adjusting plates 47 and 51 and a change in pressure of air in the air suction duct 17 is always constant, the air flow adjusting apparatus 40 can perform highly accurate adjustment easily.

In the respective embodiments described above, the air flow adjusting apparatus is applied to a dust collector which removes paper dust, powder, dust, or the like by suction drawing. The air flow adjusting apparatus can naturally have applications other than the dust collector. For example, the air flow adjusting apparatus can be applied to a suction wheel which grips the trailing edge of a paper sheet released from gripper devices 6, thus adjusting the quantity of suction air. The air flow adjusting apparatus can also be applied to an air blower, leveling foot, or the like in a sheet feed device or an air blowing device which blows air from a nozzle so as to bring a paper sheet into tight contact with the outer surface of a cylinder, thus adjusting the blowing air quantity.

Although the air source has been exemplified by a blower which supplies suction air, the air source can be a discharge pump which supplies discharge air. Various design change can be made in the air supply. Although the sectional shapes of the first and second connecting portions 27 and 28 and the shapes of the first and second communication windows 31 and 32 are both square in the first embodiment, they may be rectangular. Only the shapes of the first and second communication windows 31 and 32 may be rectangular.

As has been described above, according to the present invention, since the sum of the opening areas of the first and second connecting portions is always constant, the sum of the quantity of air passing through the first connecting portion and the quantity of air passing through the second connecting portion can always be set constant. Hence, the internal pressure between the blower and the first connecting portion can always be set constant. Even if the opening area of the first connecting portion is "0", the internal pressure does not increase. Therefore, the influence of the internal pressure, which occurs conventionally when the first connecting portion starts to open, can be eliminated, so that the air flow adjusting apparatus can perform highly accurate air flow adjustment.

## Claims

1. An air flow adjusting apparatus **characterized by** comprising:
a first air passage (24, 41) to be connected to a load;
a second air passage (25, 42) to be connected to an atmosphere;
a third air passage (26, 43) which is to be connected to an air source and branches to be connected to said first air passage and said second air passage; and
opening/closing means (22, 122, 47, 51) for opening/closing a first connecting portion (27, 45, 127) between said first air passage and said third air passage and a second connecting portion (28, 49, 128) between said second air passage and said third air passage in an interlocked manner,
wherein said opening/closing means opens/closes said first connecting portion and said second connecting portion with a sum of an opening area of said first connecting portion and an opening area of said second connecting portion being always set constant.

2. An apparatus according to claim 1, wherein said first connecting portion and said second connecting portion comprise the same sectional shape.

3. An apparatus according to claim 2, wherein said opening/closing means comprises at least one moving member (22, 122) which opens said first connecting portion and said second connecting portion complementarily.

4. An apparatus according to claim 3, wherein
said moving member comprises a plate which is supported to be movable in a direction perpendicular to air channels in said first air passage and said second air passage and includes a first window and second window with the same shape, and
when said plate moves, said first connecting portion is opened/closed in an interlocked manner with said first window and said second connecting portion is closed/opened in an interlocked manner with said second window.

5. An apparatus according to claim 4, wherein
said first connecting portion and said second connecting portion, and said first window and said second window are arrayed in a moving direction of said moving member, and
an array interval (L) between said first window and said second window is set to be equal to a length obtained by subtracting a length in a direction of array of said first connecting portion and said second connecting portion from an array distance (L') of said first connecting portion and said second connecting portion.

6. An apparatus according to claim 4, wherein said first connecting portion and said second connecting portion comprise rectangular sectional shapes, and said first window and said second window comprise rectangular shapes.

7. An apparatus according to claim 6, wherein said first window and said second window comprise the same sectional areas and the same shapes as those of said first connecting portion and said second connecting portion, respectively.

8. An apparatus according to claim 4, wherein
said first connecting portion and said second connecting portion comprise a circular sectional shapes, and
said first window and said second window comprise elliptic shapes.

9. An apparatus according to claim 2, wherein said opening/closing means comprises first moving member (47) and second moving member (51) which respectively open/close and close/open said first connecting portion and said second connecting portion separately.

10. An apparatus according to claim 1, further comprising a valve cage (21, 121) which comprises said first air passage, said second air passage, and said third air passage, and said first connecting portion and said second connecting portion and supports said opening/closing means movably.

11. An apparatus according to claim 1, further comprising a nozzle (13) which is provided to a delivery unit of a printing press and blows powder to a surface of a printed sheet,
wherein a load to which said first air passage and said second air passage are connected comprises an air suction duct (17) which takes in excessive powder discharged from said nozzle.
